Europäisches Patentamt

(19) European Patent Office

Office européen des brevets

(11) Publication number: **0 174 334**
**B1**

(12) **EUROPEAN PATENT SPECIFICATION**

(45) Date of publication of patent specification: **30.09.87**

(21) Application number: **85901113.2**

(22) Date of filing: **13.02.85**

(86) International application number:
**PCT/SE85/00072**

(87) International publication number:
**WO 85/03692 29.08.85 Gazette 85/19**

(51) Int. Cl.⁴: **B 65 G 63/02**

(54) **AN APPARATUS FOR TRANSFERRING LOAD UNITS BETWEEN TWO CARRIERS.**

(30) Priority: **21.02.84 SE 8400932**

(43) Date of publication of application:
**19.03.86 Bulletin 86/12**

(45) Publication of the grant of the patent:
**30.09.87 Bulletin 87/40**

(84) Designated Contracting States:
**AT BE CH DE FR GB LI NL SE**

(56) References cited:
**SE-B-76 139 781**
**US-A-1 830 740**
**US-A-2 004 095**
**US-A-2 512 798**

(73) Proprietor: **LÖVGREN, Sten**
**Svanholmsvägen 10**
**S-182 75 Stocksund (SE)**

(72) Inventor: **LÖVGREN, Sten**
**Svanholmsvägen 10**
**S-182 75 Stocksund (SE)**

(74) Representative: **Bjerkén, Jarl Hakan**
**c/o BJERKENS/GÄVLE PATENTBYRA AB Box 304**
**S-801 04 Gävle 1 (SE)**

Courier Press, Leamington Spa, England.

## Description

Field of the Invention and Prior Art

This invention relates to an apparatus according to the preamble of claim 1.

Such an apparatus is described in the patent US—A—1 830 740. A bridging device is described therein, the two first support path portions of which extend inside, parallel with and on substantially the same level as the two further support path portions. This requires cross bars to be arranged between the support path portions in order to make them stable against movement in the horizontal plane. As a result of this the power means for moving the transferring means from one carrier to the other cannot be disposed on a lower level than said support path portions unless these portions are located on a high level with respect to the bottom of the load carrier. Thus the result is that the apparatus becomes very bulky and a great part of the space otherwise being free for the load is lost.

Summary of the Invention

The object of this invention is to reduce the disadvantages discussed above.

In accordance with the invention this object is obtained by providing the apparatus with the characteristics which appear from the appended claims.

In this way it is obtained that no cross bars are needed between the male members in order to attain stability against lateral movement of these members. An increased stability of the apparatus· is also achieved by the fact that the support path portions of the bridging device are composed of two parts, each of which is displaceably movable on an underlying part on the first carrier. The apparatus does also make location of the power means for the transfer of the transferring means in the channel so established between the male members possible, without causing the apparatus to be unduly high. The simplicity of the apparatus according to the invention does also make it very inexpensive.

Brief Description of the Drawings

With reference to the appended drawings, below follows a specific description of an embodiment of the invention presented as an example.

In the drawings:

fig. 1 is a schematic perspective view illustrating the apparatus during load transfer,

fig. 2 is an enlarged, partly sectioned view of one of the carriers in fig. 1,

fig. 3 is a cross section along the line III—III in fig. 2,

fig. 4 is a cross section along the line IV—IV in fig. 2,

fig. 5 is a cross section along the line V—V in fig. 2, and

fig. 6 is an enlarged view of a detail in fig. 2, besides which also a part of the second carrier is shown.

Detailed Description of the Preferred Embodiment

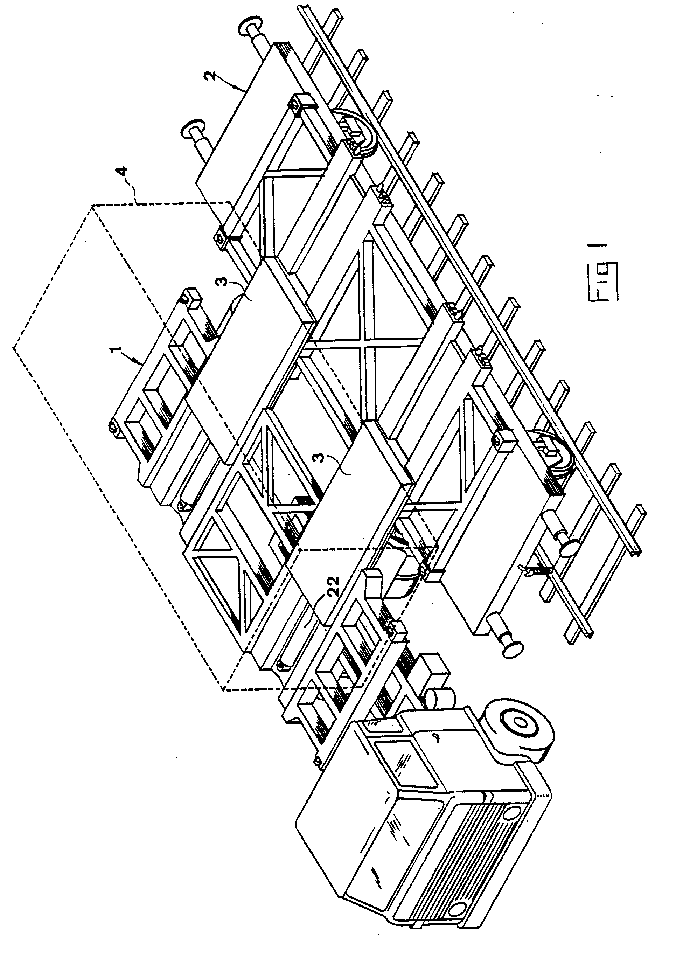

In fig. 1 two carriers are illustrated, one 1 of which has the character of a load carrying superstructure on a vehicle for road transport, while the other 2 has the character of a load carrying superstructure on a railway wagon. Transferring means 3 are movable between the carriers 1, 2 and adapted to carry the load unit 4 in question during the transfer. The transferring means 3 are in this example intended to normally be located on the road vehicle 1 and they are provided with lifting devices, so that a load unit resting on carrier portions beside the transferring means 3 can be lifted and in the elevated state transported over to the other carrier and there be lowered and supported by carrier portions of the other carrier beside the transferring means. Locking means, conventional per se, can be used in order to keep the load unit, for instance a container, in a defined position on the respective carrier during transport.

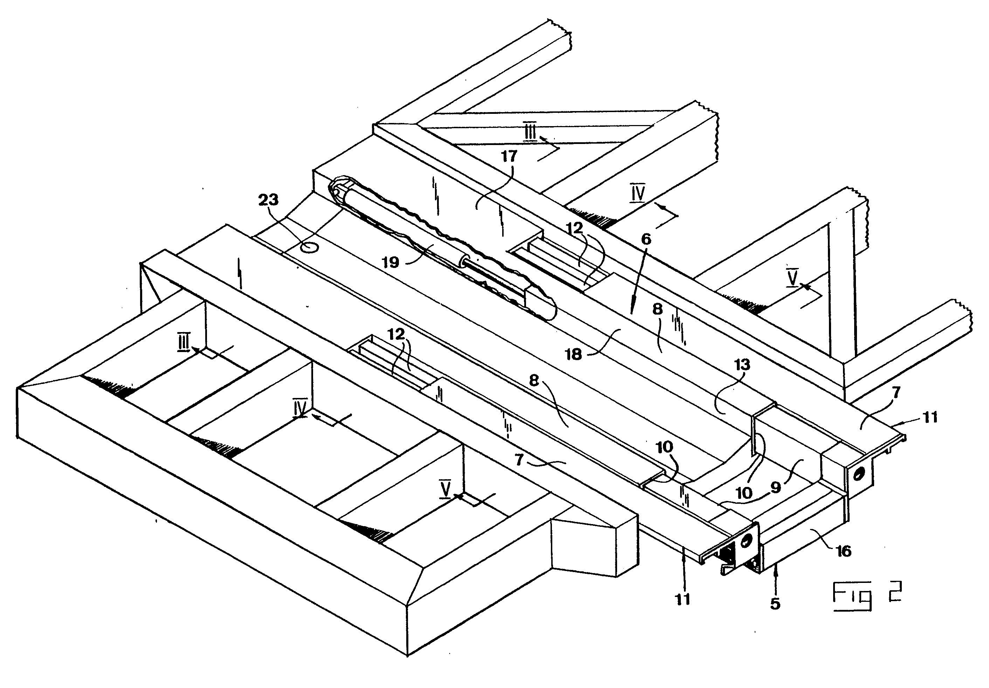

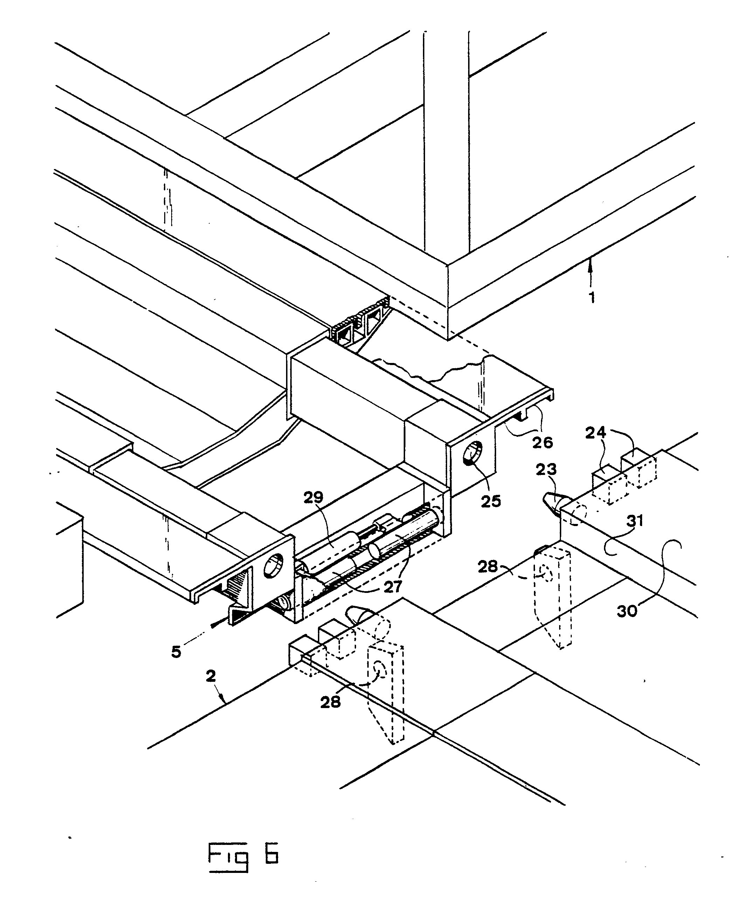

A device 5, which is movably formed in order to be able to bridge the gap between the carriers 1 and 2, is for each transferring means 3 arranged on the road vehicle 1. This device 5 forms a part of a support path device 6 for supporting the transferring means 3 during its movement and it has support path portions 7, which, when the device is moved into a bridging position, are located in over-lapping relation, in the direction of movement of the transferring means, to further support path portions 8, which are fixed on the carrier 1, so as to form a path supporting the transferring means 3, which is not shown in fig. 2 and 6, during its substantially entire movement from the carrier 1 to the carrier 2.

The support path portions 7 on the bridging device 5 are located generally in the same horizontal plane as the support path portions 8 on the carrier 1. The device 5 has at least one male member 9, which is displaceably received in a female member 10 on the carrier 1. The top side of the female member 10 forms the support path portions 8 on the carrier 1. The support path portions 7 of the bridging device 5 are constituted by a plate like part extending parallel to the direction of movement of the transferring means 3, said plate like part being displaceably movable on underlying parts 12 on the carrier 1.

In practice the bridging unit 5 comprises two male beam members 9, which are received in two female members 10 arranged on the carrier 1. The members 9, 10 consist of box girders with a rectangular cross section. The female members 10 are disposed beside each other in a spaced relation while defining a channel 13 located therebetween.

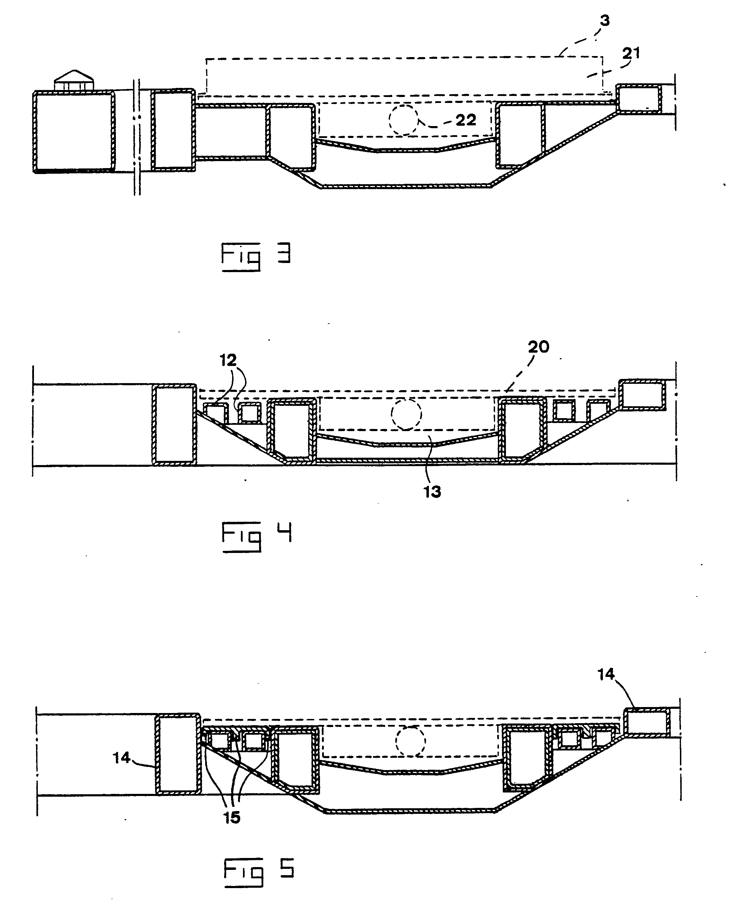

The device 5 does also have two plate like parts 11 disposed outside the male members 9. The underlying parts 12 consist, in the example, of two sets, each of which is composed of two beams (see also figs. 4 and 5) extending in the transversal direction of the carrier 1, said beams being located in such a spaced relation to each other and at such a distance to the adjacent female beam members 8 on the carrier 1 and the adjacent transversal beams 14, which form limitations for the support path of the transferring means in the longitudinal direction of the carrier 1, respectively that guiding portions 15 of the plate like parts 11 can protrude downwardly into spaces between said beams 12 and between these beams and adjacent beams 8, 14. The device 5 has a transversal, stabilizing connection 16 at the outer end.

When the device 5 is drawn back to the carrier 1 the plate like parts 11 cover the underlying beams 12 completely. The fixed support path portions 8 on the carrier 1 have unequally wide parts 17 and 18. The width of the part 17 is substantially as great as the sum of the widths of the part 18 and the surface 7. The plate parts 11 forming the two support surfaces 7 are always intended to be in over-lapping relation, in the direction of movement of the transferring means, to the support path parts 18, whereas said overlapping is reduced when the bridging device 5 is moved away from the carrier 1. This appears particularly clearly from figs. 4—5. Since such an overlapping relation always remains, the support path portions 7 and the support path parts 17 and 18 will form a support path being continuous in the direction of movement of the transferring means.

The movement back and forth of the bridging device 5 in the transversal direction of the carrier 1 is caused by two power means 19, only one of which is illustrated and which are designed as cylinders. Said cylinders are disposed inside the female beam members 10 and they are acting between the male beam members 9 and attachments relative to the carrier 1.

The transferring means 3 has the character of a slide since it comprises a plate like part 20, which is intended to rest in a slidable manner on the support path portions 7 and 8 with its side portions. The lifting device of the transferring means 3 is here formed as a cushion like device 21, which by pressure fluid supply and evacuation respectively can be brought into an expanded elevating state and a contracted inactive state (compare figs. 3 and 4). In order to cause movement of the lifting means 3 a power means 22 is provided, which here is indicated in the form of a cylinder, the one end of which at 23 is intended to be fixed to the carrier 1 (see fig. 2) and the second end of which is fixed to the transferring means 3 at its end facing in the opposite direction away from the fixing place 23. The power means 22 can extend below the plate 20 and be received in the channel 13.

As appears from fig. 3 the transferring means 3 is well supported by the support parts 17 in the region of the section III—III in fig. 2. At the section IV—IV the underlying beams 12 do not give any support, but support is instead obtained by the support parts 18 of the beams 10. At the section V—V the transferring means is supported by the support parts 18 as well as the support path portions 7. Outside the beams 10 the transferring means is supported only by the support part portions 7.

The carrier 2 and the bridging device 5 comprise engagement means (see fig. 6) 23—26, which co-operate in order to avoid relative movement between the carriers in the vertical plane. Said engagement means are adapted to automatically engage with each other on movement of the bridging device away from the first carrier 1. Since the male members 9 of the bridging device are telescopically guided in the beam means 10 of the carrier 1, the device 5 is securely held against deviations in the vertical plane relative to the carrier 1. The engagement means 23—26 transmit forces on the bridging device 5 to the carrier 2. The engagement means can more exactly have the character of engaging recesses and projections respectively, which face in the direction of movement of the transferring means 3.

The carrier 2 and the bridging device 5 comprise locking means 27, 28, the means 27 of which consist of locking pins movable by means of a power means 29 substantially in the horizontal plane and transversally to the direction of movement of the transferring means, while the locking means consist of holes for receiving the locking pins. When the pins 27 are introduced into the holes 28 movement of the bridging device 5 away from the carrier 2 is prevented.

When the bridging device 5 is extended and locked to the carrier 2 the support path portions 7 of the device 5 will be located level with transversal support path portions 30 disposed on the carrier 2, which portions 30 define a channel 31, corresponding to the channel 13 on the carrier 1, between each other.

Thus, when using the apparatus one can after having moved the bridging device 5 outwardly and fixed the same to the carrier 2, operate the transferring means 3 to move between the carriers 1 and 2, said transferring means being safely supported during its whole displacement movement.

Of course, the apparatus can be modified within the scope of the invention as defined in the attached claims. Instead of forming the transferring means as adapted to slide on the support path portions 7 and 8, rolling components could naturally be arranged either on the transferring means 3 or on the support path portions 7 and 8 or both. The support path portions 7 and 8 need not be planar as illustrated, but they may be formed as or present rails or tracks or the like. Although it is most suitable to form the transferring means 3 to accompany that carrier which the bridging devices are intended to accompany, it would be conceivable to design the transferring means to accompany the second carrier. The number of transferring means 3 may vary from one upwards. The parts 11 may also have the character of beams.

## Claims

1. An apparatus for transferring load units (4) between two carriers (1, 2), comprising at least one transferring means (3) movable between the carriers, said transferring means being adapted to carry the load unit in question during the transfer, and a device (5) arranged on at least a first (1) of the carriers, said device being movable in order to bridge the gap between the carriers, said bridging device (5) forming a part of the device (6) for supporting the transferring means (3) during its movement, said support device (6) comprising two path parts, which are located in a spaced relation to each other, said bridging device (5) having, for each of said path parts, a first support path portion (7), which extends alongside a second support path portion (8) on the first carrier (1), the support path portions (7, 8) co-operating, when the bridging device is moved into a bridging position, to form a path supporting the transferring means (3) during substantially its entire movement from the first carrier (1) to the second carrier (2), characterized in that the bridging device (5) comprises two male members (9), each of which is displaceably telescopically received in a female member (10) on the first carrier (1), that the top surfaces of the female members (10) are provided with or form the second support path portions (8), that the first support path portions (7) are provided on or constituted by two plate or beam like parts (11), each of which is displaceably movable on an underlying part (12) of the first carrier (1), and that said path parts define a channel (13) therebetween receiving a power means (22) operable to cause the movement of the transferring means (3) from one of the carriers to the other.

2. An apparatus according to claim 1, characterized in that each of the underlying parts (12) comprises two girders extending along the support path, and that support portions (15) of the plate or beam like parts (11) project downwardly into spaces between and beside said beams (12).

3. An apparatus according to claim 1 or 2, characterized in that the bridging device (5) in the extended state has an U-shape viewed from above, wherein the legs are formed by the plate or beam like parts and the two male members (9) and the base by an element (16) connecting said legs at their outer ends.

4. An apparatus according to claim 1, characterized in that the second carrier (2) and the bridging device (5) comprise engagement means (23—26) which co-operate in order to avoid relative movement between the carriers in the vertical plane.

5. An apparatus according to claim 4, characterized in that said engagement means are adapted to automatically engage with each other at the movement of the bridging device (5) away from the first carrier.

6. An apparatus according to claim 1, characterized in that the second carrier (2) and the bridging device (5) comprise locking means (27, 28), at least one (27) of which is movable and arranged, in the locking position, to prevent movement of the bridging device (5) away from the second carrier (2).

## Patentansprüche

1. Vorrichtung zum Überführen von Lasteneinheiten (4) zwischen zwei Trägern (1, 2), welche mindestens ein, zwischen den Trägern bewegliches Überführungsorgan (3), das zum Tragen der in Frage stehenden Lasteinheit während der Überführung ausgebildet ist, und eine auf wenigstens einem ersten (1) der Träger angeordnete Einrichtung (5), die zum Überbrücken des Zwischenraums zwischen den Trägern bewegbar ausgebildet ist, aufweist, wobei die Überbrückungseinrichtung (5) einen Teil einer Einrichtung (6) zum Stützen des Überführungsorgans (3) während seiner Bewegung bildet, wobei die Stützeinrichtung (6) zwei Bahnteile aufweist, die auf gegenseitigen Abstand angeordnet sind, wobei die Überbrückungseinrichtung (5) für jeden der genannten Bahnteile einen ersten Stützbahnteil (7) aufweist, der sich entlang einem zweiten Stützbahnteil (8) auf dem ersten Träger (1) erstreckt, wobei die Stützbahnteile (7, 8), wenn die Überbrückungseinrichtung in eine Überbrückungslage bewegt worden ist, zusammenwirken, um eine das Überführungsorgan (3) während hauptsächlich seiner ganzen Bewegung von dem ersten Träger (1) bis zu dem zweiten Träger (2) stützende Bahn zu bilden, dadurch gekennzeichnet, dass die Überbrückungseinrichtung (5) zwei männliche Organe (9) aufweist, von welchen jedes in einem weiblichen Organ (10) auf dem ersten Träger (1) teleskopisch verschiebbar empfangen ist, dass die Oberseiten der weiblichen Organe (10) die zweiten Stützbahnteile (8) bilden oder damit versehen sind, dass die ersten Stützbahnteile (7) aus zwei platt- oder balkenförmigen Teilen (11) gebildet sind oder darauf angeordnet sind, wobei jeder der letztgenannten Teile auf einem unterliegenden Teil (12) an dem ersten Träger (1) verschiebbar beweglich ist, und dass die genannten Bahnteile einen dazwischen vorhandenen Kanal (13) zum Empfangen einer krafterzeugenden Einrichtung (22), die zum Bewirken der Bewegung des Überführungsorgans (3) von dem einen Träger zu dem anderen betätigbar ist, abgrenzen.

2. Vorrichtung nach Anspruch 1, dadurch gekennzeichnet, dass jeder der unterliegenden Teile (12) zwei entlang der Stützbahn sich erstreckende Balken aufweist, und dass Stützteile (15) der platten- oder balkenförmigen Teile (11) nach unten in die Räume zwischen und neben den genannten Balken (12) hineinragen.

3. Vorrichtung nach Anspruch 1 oder 2, dadurch gekennzeichnet, dass die Überbrückungseinrichtung (5) in dem hinausgeschobenen Zustand von oben gesehen eine U-form aufweist, und dass die Schenkel durch die platten- oder balkenförmigen Teile und die zwei männlichen Organe (9) und der Fuss durch ein, die Schenkel an ihren Aussenenden verbindendes Element (16) gebildet sind.

4. Vorrichtung nach Anspruch 1, dadurch gekennzeichnet, dass der zweite Träger (2) und die Überbrückungseinrichtung (5) Eingriffsmittel (23—26) aufweisen, welche zum Vermeiden von Relativbewegung zwischen den Trägern in der Vertikalebene zusammenwirken.

5. Vorrichtung nach Anspruch 4, dadurch gekennzeichnet, dass die Eingriffsmittel so ausgebildet sind, dass sie bei der Bewegung der Überbrückungseinrichtung (5) von dem ersten Träger raus selbstätig im Eingriff miteinander gelangen.

6. Vorrichtung nach Anspruch 1, dadurch gekennzeichnet, dass der zweite Träger (2) und die Überbruckungseinrichtung (5) Verriegelungsorgane (27, 28) aufweisen, von denen wenigstens eins (27) bewegbar ist und so angeordnet ist, dass es in der Verriegelungslage eine Bewegung der Überbrückungseinrichtung (5) von dem zweiten Träger weg verhindert.

**Revendications**

1. Appareil pour le transfert de charges (4) entre deux porteurs (1, 2), comprenant au moins un moyen de transfert (3) apte à se déplacer entre les deux porteurs, ledit moyen de transfert étant apte à porter ladite charge au cours du transfert, et un dispositif (5) situé sur au moins le premier (1) des deux porteurs, ledit dispositif étant mobile pour combler l'intervalle entre les porteurs, ledit dispositif de liaison (5) faisant partie d'un dispositif (6) de support des moyens de transfert (3) au cours de leur déplacement, ledit dispositif de support (6) comprenant deux parties servant de voies qui sont séparées entre elles, ledit dispositif de liaison (5) possédant, pour chacune des parties servant de voie, une première portion de piste de support (7) qui s'étend le long d'une deuxième portion de piste de support (8) qui se trouve sur le premier porteur (1), les portions de piste de support (7, 8) coopérant lorsque le dispositif de liaison se déplace pour remplir sa fonction pour former une piste de support des moyens de transfert (3) au cours de leur déplacement sensiblement complet du premier porteur (1) vers le deuxième porteur (2), caractérisé en ce que le dispositif de liaison (5) comprend deux organes mâles (9) qui s'engagent et sont téléscopique-ment mobiles dans un organe récepteur (10) sur le premier porteur (1), que les faces supérieures des organes récepteurs (10) comportent ou forment les secondes portions de piste de support (8), les premières portions de piste de support (7) sont prévues sur ou constituées par deux pièces ayant la forme de plaques ou de poutres (11) dont chacune se déplace sur une partie (12) sousjacente du premier porteur (1), et que lesdites portions de pistes de support délimitent entre elles un canal (13) pour recevoir un organe moteur (22) agencé pour provoquer le déplacement des moyens de transfert (3) d'un porteur à l'autre.

2. Appareil selon la revendication 1, caractérisé en ce que chacune des parties (12) sousjacentes comprend deux poutrelles s'étendant le long de la piste de support, et en ce que les portions de support (15) des parties (11) en forme de plaques ou de poutres font saillie vers le bas dans des espaces compris entre lesdites poutres (12) et sur les côtes de celles-ci.

3. Appareil selon la revendication 1 ou 2, caractérisé en ce que, lorsqu'il est déplié, le dispositif de liaison (5) a, vu de dessus, la forme d'un U dont les branches sont constituées par les parties en forme de plaques ou de poutres et les deux organes mâles (9) et dont la base est constituée par une pièce (16) reliant lesdites branches par ses extrémités extérieures.

4. Appareil selon la revendication 1, caractérisé en ce que le deuxième porteur (2) et le dispositif de liaison (5) comprennent des moyens (23—26) qui coopèrent, afin d'éviter un déplacement relatif entre les deux porteurs dans la direction verticale.

5. Appareil selon la revendication 4, caractérisé en ce que lesdits moyens sont aptes à coopérer entre eux automatiquement lorsque le dispositif de liaison (5) s'éloigne du premier porteur.

6. Appareil selon la revendication 1, caractérisé en ce que le deuxième porteur (2) et le dispositif de liaison (5) comprennent des moyens de verrouillage (27, 28) dont au moins un (27) est mobile et conçu pour éviter, dans la position de verrouillage, que le dispositif de liaison (5) ne s'éloigne du deuxième porteur.

Fig 1

0 174 334

Fig 2

0 174 334

Fig 3

Fig 4

Fig 5

Fig 6

4